# EUROPEAN PATENT SPECIFICATION

(11) **EP 3 594 105 B1**
(45) Date of publication and mention of the grant of the patent: **24.08.2022**
(21) Application number: 19173405.2
(22) Date of filing: 08.05.2019
(51) Int. Cl.: B64C 3/18

(54) **MULTI-SPAR WING ARRANGEMENTS**
MEHRHOLMFLÜGELANORDNUNGEN
AGENCEMENTS D'AILE MULTI-LONGERONS

(30) Priority: 12.07.2018 US 201816033695
(43) Date of publication of application: 15.01.2020
(73) Proprietor: Textron Innovations Inc., Providence, Rhode Island 02903 (US)
(72) Inventor: DECKER, George R., Mansfield,Texas 76063 (US); HEERINGA, Tjepke, Dallas,Texas 75230 (US)
(74) Representative: Barker Brettell LLP

(56) References cited:
- EP-A1- 3 037 343
- EP-A1- 3 326 917
- EP-A2- 0 199 914
- GB-A- 2 475 523
- JP-A- H1 199 993
- US-A1- 2015 375 846
- US-A1- 2018 086 429
- US-B2- 9 981 734

## Description

### TECHNICAL FIELD

This disclosure relates in general to the field of aircraft and, more particularly, though not exclusively, to multi-spar wing arrangements.

### BACKGROUND

There are numerous considerations involved in the design of tiltrotor aircraft and other aircraft, including size, weight, power efficiency, fuel efficiency, noise, vibration, structural loads, and so forth. In many cases, however, it may be challenging to improve certain aspects of an aircraft without disrupting other aspects. For example, wing design implicates numerous performance considerations and is often an extremely challenging aspect of aircraft design.

US2018086429A1 discloses an airfoil-shaped body (such as a wing or a flight control surface) comprising a base assembly made of composite material, which base assembly in turn comprises a base skin and one or more hat-shaped spars integrally formed with the base skin. The airfoil-shaped body further comprises a close-out skin that is attached to the hat-shaped spars using fasteners. The method for manufacturing such an airfoil-shaped body uses a resin infusion process.

EP3037343A1 discloses an aircraft wing torsion box, the aircraft wing torsion box having a front associated with a leading portion of the wing torsion box and a rear associated with a trailing portion of the wing torsion box, the wing torsion box comprising: a support member comprising a front spar and a rear spar and a connecting portion between the front and rear spars, the connecting portion comprising at least one interposing spar, at least one portion of upper wing skin; and at least one portion of lower wing skin, at least one portion of the upper wing skin and at least one portion of the lower wing skin being supported by the support member.

GB2475523A discloses a dual skinned structure comprises a first skin, a second skin and an intermediate structure. The intermediate structure comprises a plurality of first contact portions connected to an interior surface of the first skin, a plurality of second portions connected to an interior surface of the second skin and a plurality of interconnecting portions integral to the first and second contact portions and extending between ones of the first and second contact portions to form an internal structure alternating between the interior surfaces of the first and second skins. The first and second skins and the intermediate structure may comprise fiber reinforced composite material. In forming the structure use may be made of releasable mandrels and deltoid fillers. The dual skinned structure may have an aerofoil section such as winglets.

US2015375846A1 discloses a method for manufacturing a leading edge of an aircraft lifting surface, the leading edge having a leading edge skin and a supporting structure including at least two spars span-wise arranged and fixed internally to the leading edge skin. In the method, the supporting structure is obtained from a single laminate of plies of composite material, which is conformed in such that in a cross-sectional view, the laminate includes a trapezoidal configuration which forms a front spar and a rear spar of the supporting structure. A leading edge obtained by the above-described method is disclosed.

JPH1199993A discloses a tail assembly constituted of an upper skin, a lower skin formed out of prepreg as material, and a wave-like ribspur arranged therebetween. The ribspur is provided with wall parts extending in the span direction, joint parts formed on upper and lower both ends of the wall parts, and a plurality of beads on the wall parts spacedly in the span direction and formed in the direction up and down, and it is arranged between the upper and lower skins so as to be along the chord direction. The ribspur is arranged on the lower skin through adhesive, the upper skin is arranged thereon through adhesive, and by pressure-heat-setting the whole of them in an autoclave, the tail assembly is formed.

EP0199914A2 discloses a supporting member for aircraft wing and tail units, having a substructure which is formed from spar webs extending towards each other in the shape of a V, and which comprises an integral, plastically deformed metal sheet for fixing the skin of the member, characterised in that the integral sheet member forming the substructure is deformed superplastically, and in that the metal sheet forming the substructure forms any desired number of spar webs extending towards each other in the shape of a V, which webs at the same time extend in a corrugated form in their depth.

EP3326917A1 discloses an arrangement of a structural element for an aerospace vehicle and a battery set. The structural element extends along a longitudinal direction and has a main web, a first flange and a second flange. The flanges extend away from the main web and are delimited by flange edges extending along the longitudinal direction. The first flange, the second flange and the main web form a U-shaped profile defining a cavity. The battery set comprises a baseplate and at least one battery arranged on the baseplate. The structural element and the battery set are formed such that the baseplate can be releasably attached to the structural element. The baseplate extends between flange edges and the battery is received in the cavity when the battery set is mounted to the structural element. Further, an aerospace vehicle comprising such an arrangement, a structural element for an aerospace vehicle and a battery set are described and claimed.

US2018079483A1 discloses an aircraft wing including a fuel tank located in the wing, a channel defining a cavity in the fuel tank, the channel including at least two channel ends terminating at an upper or lower wing surface, a driveshaft located in the cavity; and an access panel located on the wing surface and being movable between an open position so that access to the cavity is permitted, and a closed position so that the cavity is at least partially covered by the access panel to inhibit access to the cavity.

### SUMMARY

An aspect of the invention is set out according to appended claim 1. Embodiments of the invention are set out according to the appended dependent claims.

In some cases, the wing may include at least one electrical component within at least one dry bay area of the wing.

In some cases, the multi-spar element may be one of a plurality of multi-spar elements of the wing, wherein each multi-spar element of the plurality of multi-spar element may extend between the upper skin portion and the lower skin portion. In still some cases, the multi-spar element may provide at least one of: a forward spar for the wing; and an aft spar for the wing. In still some cases, the wing may include a forward spar; and an aft spar, wherein the multi-spar element is between the forward spar and the aft spar.

### BRIEF DESCRIPTION OF THE DRAWINGS

To provide a more complete understanding of the present disclosure and features and advantages thereof, reference is made to the following description, taken in conjunction with the accompanying figures, in which like reference numerals represent like elements.
**FIGS. 1A-1B** are simplified schematic diagrams of an example aircraft, in accordance with certain embodiments.
**FIGS. 2A-2C** are simplified diagrams illustrating example details associated with an example multi-spar element for an example wing, in accordance with certain embodiments.
**FIGS. 3-10** are simplified side, cross-sectional view diagrams of various example multi-spar wing arrangements for various example wings, in accordance with certain embodiments.

### DETAILED DESCRIPTION

The following disclosure describes various illustrative embodiments and examples for implementing the features and functionality of the present disclosure. While particular components, arrangements, and/or features are described below in connection with various example embodiments, these are merely examples used to simplify the present disclosure and are not intended to be limiting. It will of course be appreciated that in the development of any actual embodiment, numerous implementation-specific decisions must be made to achieve the developer's specific goals, including compliance with system, business, and/or legal constraints, which may vary from one implementation to another. Moreover, it will be appreciated that, while such a development effort might be complex and time-consuming; it would nevertheless be a routine undertaking for those of ordinary skill in the art having the benefit of this disclosure.

In the Specification, reference may be made to the spatial relationships between various components and to the spatial orientation of various aspects of components as depicted in the attached drawings. However, as will be recognized by those skilled in the art after a complete reading of the present disclosure, the devices, components, members, apparatuses, etc. described herein may be positioned in any desired orientation. Thus, the use of terms such as 'above', 'below', 'upper', 'lower', 'top', 'bottom', 'beside', 'between', or other similar terms to describe spatial relationship(s) between various components or to describe the spatial orientation of aspects of such components, should be understood to describe a relative relationship between the components or a spatial orientation of aspects of such components, respectively, as the components described herein may be oriented in any desired direction. When used to describe a range of dimensions or other characteristics (e.g., time, pressure, temperature, length, width, etc.) of an element, operations, and/or conditions, the phrase 'between X and Y' represents a range that includes X and Y.

Additionally, as referred to herein in this Specification, the terms 'forward', 'aft', 'inboard', and 'outboard' may be used to describe relative relationship(s) between components and/or spatial orientation of aspect(s) of a component or components. The term 'forward' may refer to a special direction that is closer to a front of an aircraft relative to another component or component aspect(s). The term 'aft' may refer to a special direction that is closer to a rear of an aircraft relative to another component or component aspect(s). The term 'inboard' may refer to a location of a component that is within the fuselage of an aircraft and/or a spatial direction that is closer to or along a centerline of the aircraft relative to another component or component aspect, wherein the centerline runs in a between the front and the rear of the aircraft. The term 'outboard' may refer to a location of a component that is outside the fuselage of an aircraft and/or a special direction that farther from the centerline of the aircraft relative to another component or component aspect.

Further, the present disclosure may repeat reference numerals and/or letters in the various examples. This repetition is for the purpose of simplicity and clarity and does not in itself dictate a relationship between the various embodiments and/or configurations discussed. Example embodiments that may be used to implement the features and functionality of this disclosure will now be described with more particular reference to the accompanying FIGURES.

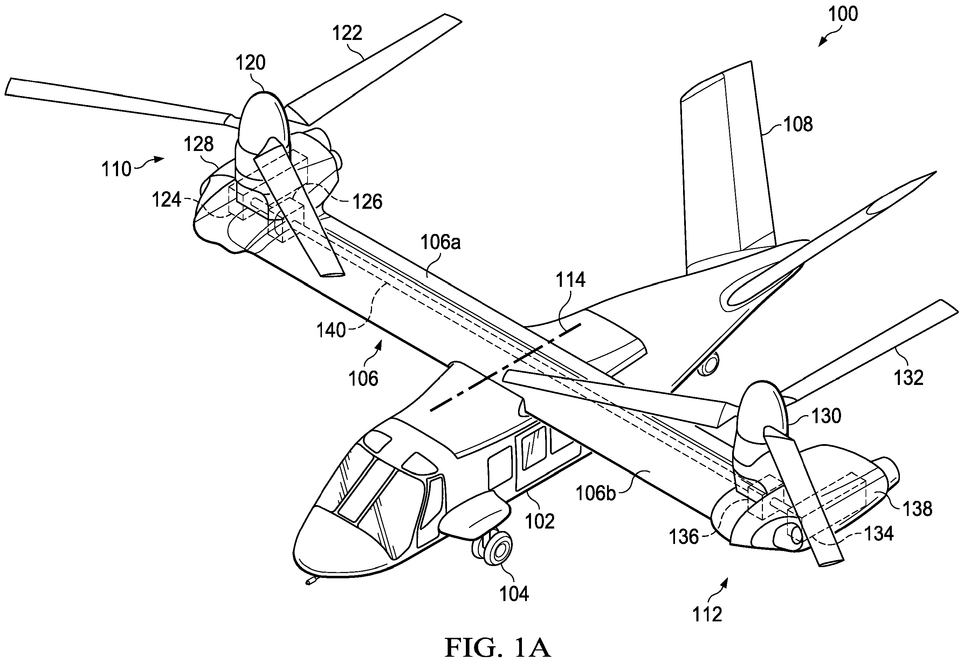

Referring to FIGS. 1A-1B, FIGS. 1A-1B illustrate perspective views of an example aircraft, which in this example is a tiltrotor aircraft 100. Tiltrotor aircraft 100 includes a fuselage 102, a landing gear 104, a wing 106, a tail member 108, a propulsion system 110, and a propulsion system 112. The fuselage 102 is the main body of the tiltrotor aircraft 100, which may include a cabin (e.g., for crew, passengers, and/or cargo) and/or may house certain mechanical and electrical components for tiltrotor aircraft 100. In the illustrated embodiment, tail member 108 may be used as a vertical stabilizer.

Propulsion system 110 includes a proprotor 120 that includes a plurality of rotor blades 122. Propulsion system 112 includes a proprotor 130 that includes a plurality of rotor blades 132. Various engine(s), gearbox(es), and drive shaft(s) may be provided in various configurations to provide torque to proprotors 120 and 130. For example, in at least one embodiment, propulsion system 110 may include an engine 124 within a nacelle 128 that is mechanically connected to a gearbox 126 to provide torque to proprotor 120 and propulsion system 112 may include an engine 134 within a nacelle 138 that is mechanically connected to a gearbox 136 to provide torque to proprotor 130 to provide flight capabilities (e.g., flight direction, thrust, and/or lift) for tiltrotor aircraft 100. The position or proprotors 120 and 130, as well as the pitch of rotor blades 122 and 132, can be selectively controlled in order to selectively control direction, thrust, and/or lift of tiltrotor aircraft 100. Further, each gearbox 126 and 136 may be mechanically connected together via an interconnect drive shaft (ICDS) 140 such that if one engine fails, the other engine may provide torque to the gearbox associated with the failed engine in order to maintain flight capabilities for both proprotors 120 and 130.

In yet another embodiment (not shown), tiltrotor aircraft 100 may include an engine located in the fuselage 102 that may be mechanically connected to the gearbox for proprotor 120 via one drive shaft and may be mechanically connected to the gearbox for proprotor 130 via another drive shaft to provide flight capabilities for tiltrotor aircraft 100. Other engine, gearbox, and drive shaft configurations for tiltrotor aircraft may be envisioned and, thus, are clearly within the scope of the present disclosure.

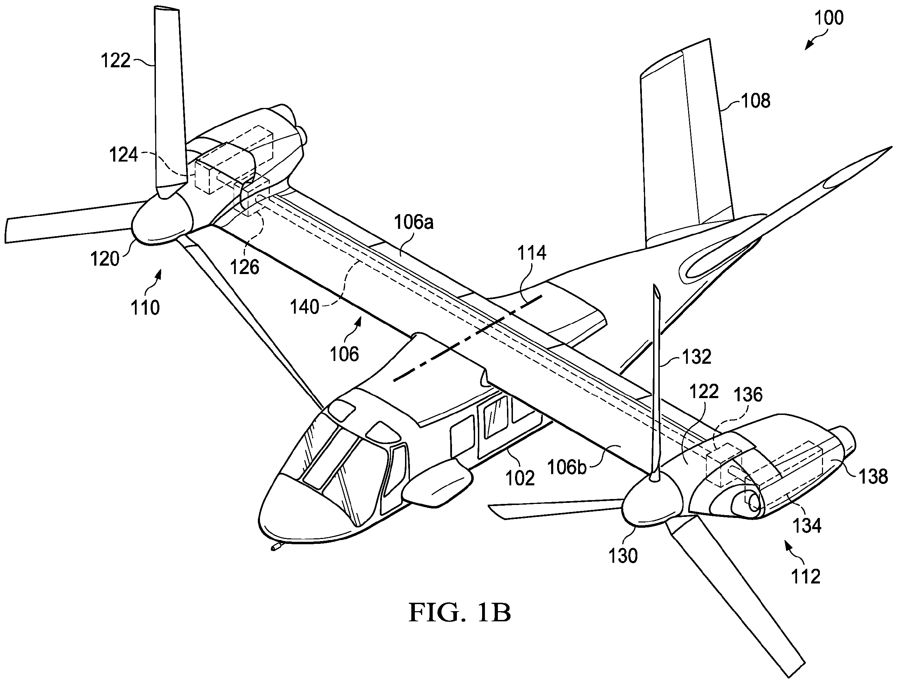

The position of proprotors 120 and 130 are moveable between a helicopter mode and an airplane mode to provide different types of thrust for tiltrotor aircraft 100. FIG. 1A illustrates tiltrotor aircraft 100 in helicopter mode in which proprotors 120 and 130 are positioned substantially vertical to provide a lifting thrust. FIG. 1B illustrates tiltrotor aircraft 100 in an airplane mode in which proprotors 120 and 130 are positioned substantially horizontal to provide a forward thrust in which a lifting force is supplied by wing 106. It should be appreciated that tiltrotor aircraft can be operated such that proprotors 120 and 130 can be selectively positioned between airplane mode and helicopter mode, which can be referred to as a conversion mode.

Wing(s) for tiltrotor aircraft, such as tiltrotor aircraft 100, are typically constructed as a one-cell torque box that includes a forward spar and an aft spar that are covered by an upper skin and a lower skin to make one continuous closed volume. A primary purpose of the closed volume is to provide fuel storage within the wing; however, some arrangements may also be used to house mechanical and/or electrical components, such as interconnect drive shaft(s) associated with propulsion systems of the tiltrotor aircraft, actuators, sensors, batteries, transformers, among others. Conventional wing construction techniques that provide for housing drive shaft(s) and for carrying fuel typically include a 3-spar construction that includes a forward spar, an aft spar, and a middle spar that are covered by an upper skin and a lower skin in order to provide a 'wet bay' area between the middle spar and one of the forward or aft spar that can be used to carry fuel and a 'dry bay' area between the middle spar and the other of the forward or aft spar that can be used to house the drive shaft(s); thereby providing a multi-cell torque box.

For wings that are designed to carry fuel as well as house mechanical and/or electrical components, it may be advantageous to maximize the wet bay area in which to carry fuel in the wing. Thus, it may desirable to construct a wing having an arrangement of spars in which the dry bay area is minimized while the wet bay area is maximized within certain design guidelines, clearances, etc. that may be needed for mechanical and/or electrical components that may be housed in the dry bay area (or areas) of the wing.

One potential solution for maximizing the wet bay area for a wing might include adding an additional separate middle spar in the wing to frame-out the dry bay area for mechanical and/or electrical component(s); thereby providing additional area for wet usage (e.g., additional fuel storage). However, adding an additional, separate spar into a wing arrangement would bring the total spar count to 4 spars, which would increase production costs and time as each spar would have separate manufacturing processes as well as increase total part count for wing construction as each spar would utilize separate attachment hardware (e.g., fasteners, brackets, etc.) for attaching the spars to the upper and lower skin portions, wing ribs, etc. Another potential solution for maximizing the wet bay area for a wing might include an arrangement including at least 3 spars in which mechanical and/or electrical component(s) may be positioned towards the far forward or aft areas of the wing, however, such a solution can impact the design of mechanical and/or electrical components and/or systems for tiltrotor aircraft.

The present disclosure describes various embodiments that provide wing arrangements that include at least one multi-spar element that includes multiple spar elements integrated together. The multiple spar elements may be integrated together into a continuously connected element along a forward and aft directional axis of a wing (e.g., the spar elements may be discontinuous between left and right sides of an aircraft). In accordance with embodiments, a multi-spar element extends between an upper skin portion and a lower skin portion of a wing and may include integral attachment elements (e.g., flanges, flat portions, etc.) that may facilitate attaching the multi-spar element to the upper skin portion and the lower skin portion at various locations. In embodiments, a multi-spar element provides separation between at least one wet bay and at least one dry bay within the interior area of a wing. In at least one embodiment, a multi-spar element may provide separation between at least two wet bays and at least one dry bay within the interior area of a wing. In some embodiments, one or more electrical components (e.g., batteries, sensors, etc.) may be housed in at least one dry bay for a wing. In embodiments, a liquid, such as fuel, is stored within wet bay(s) of a wing.

In some embodiments, a wing may include multiple multi-spar elements. In still some embodiments, at least one spar element of a multi-spar element may be a forward spar of a wing. In still some embodiments, at least one spar element of a multi-spar element may be an aft spar of a wing. Any number of spar elements may be included in a multi-spar element in accordance with embodiments described herein. Thus, multi-spar elements described throughout this disclosure may provide numerous technical advantages. One advantage of embodiments described herein may include reducing manufacturing costs and/or time of wing construction by providing a wing arrangement that includes at least one interior multi-spar element in comparison to the manufacturing cost and/or time of a wing arrangement that includes multiple individual interior spars. One other advantage of embodiments described herein may include reducing part count by providing a wing arrangement that includes at least one interior multi-spar element in comparison to the part count of a wing arrangement that includes multiple individual interior spars. One other advantage of embodiments described herein may include the ability to provide any configuration of any number spar elements integrated together as a continuous multi-spar element that includes integral attachment elements, which may facilitate configuring any number, shape, size, design, etc. of multi-spar element(s) for any wing arrangement(s) depending on applications and/or implementations.

Example embodiments associated with multi-spar wing arrangements are described below with more particular reference to the remaining FIGS. Although example embodiments discussed herein are described with reference to tiltrotor aircraft 100, it should be appreciated that tiltrotor aircraft 100 of FIGS. 1A-1B is merely illustrative of a variety of aircraft in which multi-spar wing arrangements may be used in accordance embodiments of the present disclosure. Other aircraft in which multi-spar wing arrangements may be used can include, for example, fixed wing airplanes, hybrid aircraft, electric aircraft, unmanned aircraft, gyrocopters, a variety of helicopter configurations, and/or drones, among other examples. Moreover, it should be appreciated that even though multi-spar arrangements may be used in aircraft, multi-spar arrangements as discussed for various embodiments described herein may also be used in a variety of industries including, but not limited to, aerospace, non-aircraft transportation (e.g., boats, automobiles, busses, etc.), railway transportation, and/or any other industry.

It is to be understood that a wing may include an arrangement of elements that may be substantially symmetrical as the wing extends between the fuselage and ends of the wing at opposite sides of an aircraft (e.g., as wing 106 extends between the fuselage 102 and each propulsion system 110 and 112, as shown for tiltrotor aircraft 100 in FIGS. 1A-1B). For example, a tiltrotor aircraft may include a left wing portion 106a and a right wing portion 106b that may be coupled together at a splice location at a centerline (generally indicated by dashed-line 114) of the aircraft to form the wing 106 for the aircraft. For sake of efficiency, certain features related to aircraft wing arrangements may be described with respect to simplified side, cross-sectional view diagrams illustrating example wing arrangements for some embodiments discussed herein; however, other diagrams may be used as well.

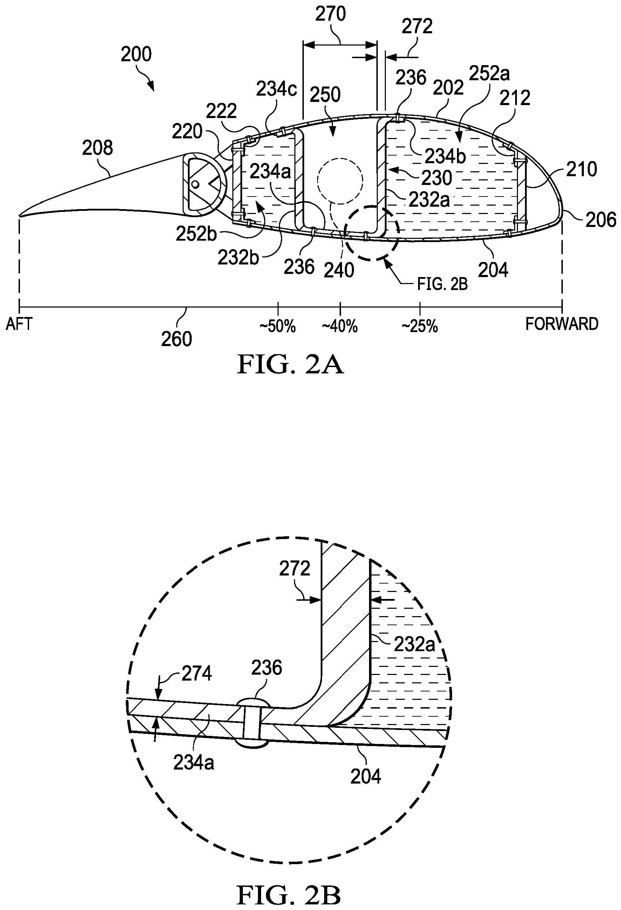

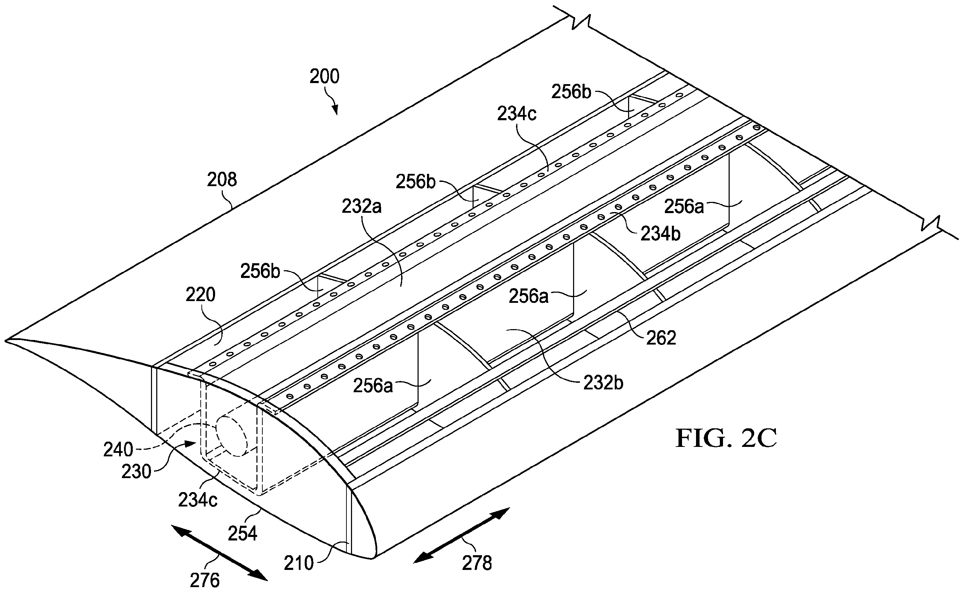

Referring to FIGS. 2A-2C, FIGS. 2A-2C are simplified diagrams illustrating example details that may be associated with a multi-spar wing arrangement for an example wing 200, in accordance with certain embodiments. Referring to FIGS. 2A-2B, FIGS. 2A-2B are side, cross-sectional view diagrams illustrating example details associated an example multi-spar element 230 for wing 200, in accordance with certain embodiments. Referring to FIG. 2C, FIG. 2C is a simplified perspective view diagram illustrating other example details that may be associated with the example multi-spar element 230 for wing 200, in accordance with certain embodiments.

Referring to FIG. 2A, wing 200 includes an upper skin portion 202, a lower skin portion 204, a forward (or nose) skin 206, and a moveable aileron 208. It is to be understood that wing 200 may have any suitable shape in accordance with embodiments described herein. Wing 200 further includes a forward spar 210, an aft spar 220, and multi-spar element 230, in which forward spar 210, aft spar 220, and multi-spar element 230 are attached to and extends between the upper skin portion 202 and the lower skin portion 204. Multi-spar element 230 is attached to the upper skin portion 202 and the lower skin portion 204 using fasteners 236. In some embodiments, a forward spar (e.g., forward spar 210) and an aft spar (e.g., aft spar 220) may be considered exterior spars for a wing arrangement, while a multi-spar element (e.g., multi-spar element 230) may be considered an interior spar. In some instances, multi-spar element 230 may be referred to as a 'hat section spar', as the shape of the multi-spar element 230 may be representative of a top hat.

Multi-spar element 230 is a continuously integrated element along a forward and aft directional axis (generally indicated by arrows 276, shown in FIG. 2C) that includes a first spar element 232a, a second spar element 232b, a first attachment element 234a, a second attachment element 234b, and a third attachment element 234c. In at least one embodiment, multi-spar element 230 may be discontinuous between left and right sides of an aircraft due to left and right portions (not shown) of wing 200 being attached together at a splice location (not shown) at the centerline of the aircraft.

For purposes of the embodiment of FIGS. 2A-2C, first spar element 232a may be referred to as an interior forward spar element 232a and second spar element 232b may be referred to as an interior aft spar element 232b for wing 200. Forward spar 210 may include separate, non-integrated attachment elements 212 (e.g., brackets, etc.) and aft spar 220 may include separate, non-integrated attachment elements 222 (e.g., brackets, etc.) to facilitate attaching the spars to the upper skin portion 202 and the lower skin portion 204. In at least one embodiment, forward skin 206 may be attached to forward spar 210 using attachment elements and fasteners (not shown).

Interior forward spar element 232a may include attachment element 234b integrated therein that may facilitate attaching interior forward spar element 232a to the upper skin portion 202 using fasteners 236. Similarly, interior aft spar element 232b may include third attachment element 234c integrated therein that may facilitate attaching interior aft spar element 232b to the upper skin portion 202 using fasteners 236. Interior forward spar element 232a and interior aft spar element 232b may extend between the upper skin portion 202 and the lower skin portion 204 and first attachment element 234a integrated into the multi-spar element 230 may facilitate continuously connecting the interior forward spar element 232a and the interior aft spar element 232b together as well as attaching each spar element to the lower skin portion 204 using fasteners 236.

Integrated attachment elements 234a-234c for multi-spar element 230 may advantageously reduce the part count needed for attaching the multi-spar element 230 to the upper skin portion 202 and the lower skin portion 204. Compare, for example, that forward spar 210 utilizes separate, non-integrated attachment elements 212 at upper and lower locations of the spar to attach the spar to the upper and lower skin portions 202 and 204. Similarly, aft spar 220 utilizes separate, non-integrated attachment elements 222 at upper and lower locations of the spar to attach the spar to the upper and lower skin portions 202 and 204. Thus, the part count needed for attaching multi-spar element 230 to the upper and lower skin portions 202 and 204 can be reduced in comparison to conventional spar arrangements.

The multi-spar wing arrangement illustrated for the embodiment of FIGS. 2A-2C provides a dry bay 250, a first (forward) wet bay 252a and a second (aft) wet bay 252b for wing 200. The forward wet bay 252a and the aft wet bay 252b are used to store a liquid, such as fuel, within the interior area of wing 200. Thus, the multi-spar wing arrangement for wing 200 may provide for an additional forward or aft wet bay area over wing arrangements having only one wet bay area.

In some embodiments, providing multiple wet bay(s) for a wing may facilitate an increase in fuel storage volume between 30% and 40% over wing arrangements having only one wet bay to provide separation from a dry bay. A drive shaft 240 is housed within the dry bay 250 of wing 200. The approximate chord location of the dry bay 250, mechanical component(s), and/or electrical component(s) that may be housed within the dry bay 250 can be varied along the chord length 260 of wing 200. For example, in at least one embodiment, a mechanical component, such as drive shaft 240, and/or electrical component(s) may be located at approximately 40% chord (measured forward-to-aft) within the dry bay 250; however, the location of the mechanical component(s) and/or electrical component(s) may be varied between approximately 25% chord and approximately 50% chord; while still advantageously providing increased liquid storage volume using the forward and aft coves provided by wet bays 252a and 252b, respectively, over wing arrangements having only one wet bay area. It is to be understood that other wet/dry bay locations may be envisioned for other wing designs, which may or may not include moveable ailerons and/or any other wing element considerations.

In some embodiments, multi-spar element 230 may provide for the ability to 'frame-out' the dry bay 250 to provide suitable clearance between the drive shaft 240 and the interior spar elements and also minimize the area and volume of the dry bay 250; thereby, allowing for the ability to maximize the area and volume of the wet bays 252a, 252b.

In some embodiments, providing a minimized frame-out area for mechanical component(s) (e.g., drive shaft 240) and/or electrical component(s) may advantageously provide for the ability to incorporate suitably-sized access features (e.g., doors, hatches, etc.) within the upper skin portion 202 and/or the lower skin portions 204 to provide to access the mechanical component(s) and/or electrical component(s) without needing additional support structures within the wing 200 to support such access features (e.g., the interior forward spar element 232a and/or the interior aft spar element 232b could provide support for access attachment hardware such as hinges, latches, etc. to be integrated into the upper and/or lower skin portions for the dry bay 250) and/or without needing to provide excessively large access features that may cause additional manufacturing cost/time and/or weight penalties to be incurred for wing 200.

Further, in some embodiments, a multi-spar element (e.g., multi-spar element 230) may be advantageous to use for a wing arrangement having at least two interior spar elements in relatively close proximity to each other. For example, in at least one embodiment, interior forward spar element 232a and interior aft spar element 232b may be separated by a distance 270, which may vary between 101.6mm (4 inches) and 304.8mm (12 inches); however, other distances may be envisioned depending on applications and/or implementations.

FIG. 2C is a simplified perspective view diagram illustrating other example details that may be associated with the example multi-spar wing arrangement for wing 200. For the embodiment of FIG. 2C, the upper skin portion 202 may be considered to be removed from wing 200. In at least one embodiment, wing 200 can include a number of ribs including, but not limited to, an outboard rib 254 and one or more inboard rib(s) 256. In at least one embodiment, the outboard rib 254 and inboard rib(s) 256 can extend laterally along the forward and aft directional axis 276 and can include a first inboard rib portion 256a that may extend laterally between and may be attached to (e.g., using fasteners, bonding, curing processes, etc.) forward spar 210 and interior forward spar element 232a and a second inboard rib portion 256b that may extend laterally along the forward and aft directional axis 276 between and may be attached to aft spar 220 and interior aft spar element 232b. The outboard rib 254 and inboard ribs 256 may extend vertically between and may be attached to the upper skin portion 202 and the lower skin portion 204 of wing 200.

In some embodiments, utilizing one or more multi-spar element(s) for wing construction may advantageously provide for the ability to reduce or completely eliminate the use of interior (inboard) ribs for a wing. In conventional wing construction, interior rib spacing is generally set by the compression stability of wing skin stiffeners (e.g., stringers) that may be installed along an inboard and outboard directional axis (generally indicated by arrows 278) of a wing. An example wing skin stiffener 262 is illustrated in FIG. 2C, for illustrative purposes only. Skin stiffeners prevent the wing skin panels from buckling under compression/shear loading, but they themselves are also subject to buckling concerns. If enough spar elements are included in multi-spar element(s) for a given wing, the multi-spar element(s) alone may provide enough stiffening to the skin to prevent skin buckling; thereby eliminating the need for skin stiffeners. Additionally, since the spar elements for a multi-spar element are more capable in overall stability than a simple skin stiffener, larger spacing between inboard ribs may be allowed for a multi-spar wing construction, in some embodiments. In still some embodiments, utilizing one or more multi-spar element(s) for a wing construction may advantageously provide for the ability to have a wing construction that does not include any inboard ribs, which may simplify manufacturing processes and/or costs.

A multi-spar element (e.g., multi-spar element 230) may have any suitable dimensions. In at least one embodiment, multi-spar element 230 may have a spar element cross-sectional thickness 272 which may be less than 25.4mm (one inch); however, other thicknesses may be envisioned depending on applications and/or implementations. For example, in some embodiments, spar element cross-sectional thickness 272 may range between 0.254mm (0.010 inches) and 12.7mm (0.50 inches). In some embodiments, spar element(s) (e.g., 232a and/or 232b) of a multi-spar element (e.g., 230) may have a cross-sectional thickness that is different (e.g., greater than or less than) than a cross-sectional thickness 274 (as shown in FIG. 2B) of attachment element(s) (e.g., 234a, 234b, and/or 234c) of the multi-spar element; however, in other embodiments, the multi-spar elements and the attachment elements may have a same thickness. In some embodiments, for example, spar elements (e.g., 232a, 232b) and/or attachment elements (234a, 234b, and/or 234c) of a multi-spar element (230) may have a cross-sectional thickness that may include one or more tapered or variable thickness portions. For example, as shown in FIG. 2B, multi-spar element 230 may have a cross-sectional thickness that is tapered or varied from a thicker spar element 232a to a thinner attachment element 234b in some embodiments.

Multi-spar element 230 may be composed of any suitable material(s) including, but not limited to, a plastic, reinforced plastic, metal (e.g., aluminum, steel, etc.) and/or metal alloy, rubber, synthetic materials, fiberglass, reinforced fiberglass, composite materials (e.g. a carbon composite such as a carbon fiber reinforced polymer (CFRP)), combinations thereof, or the like. CFRPs have the advantage of high strength-to-weight ratio, modulus (stiffness to density ratio) that can be 3.5 times to 5 times that of steel or aluminum, longer life than metals, higher corrosion resistance, tensile strength that can be 4 times to 6 times that of steel or aluminum, and greater design flexibility. Furthermore, the bonded construction of composites such as CFRPs can reduce the number joints and fasteners for each component, making these components easy to repair. In various embodiments, the multi-spar element 230 may be formed using any suitable technique including, but not limited to, metal fabrication and/or machining techniques, compression molding techniques, composite fabrication techniques, combinations thereof, or the like.

In various embodiments, fasteners 236 may be rivets, screws, bolts, combinations thereof, or the like to provide a means for attaching the multi-spar element 230 to the upper skin portion 202 and the lower skin portion 204 for wing 200. In some embodiments, an adhesive and/or co-cured composite may be used in addition to and/or in addition to using fasteners 236 to attach the multi-spar element 230 to the upper skin portion 202 and the lower skin portion 204 for wing 200.

It is to be understood that the arrangement and/or configuration of elements/features of multi-spar element 230 are provided for illustrative purpose only and are not meant to limit the broad scope of the present disclosure. For example, in at least one embodiment, the hat section spar may be 'flipped' such that first attachment element 234a may be attached to the upper skin portion 202 and attachment elements 234b and 234c may be attached to the lower skin portion 204. Other variations can be envisioned.

Some of the elements illustrated in FIGS. 2A-2C are included in other ones of the remaining FIGS.; however, the discussion of these elements may not be repeated when discussing the remaining FIGS. for sake of brevity and any of these elements may take any of the forms disclosed herein.

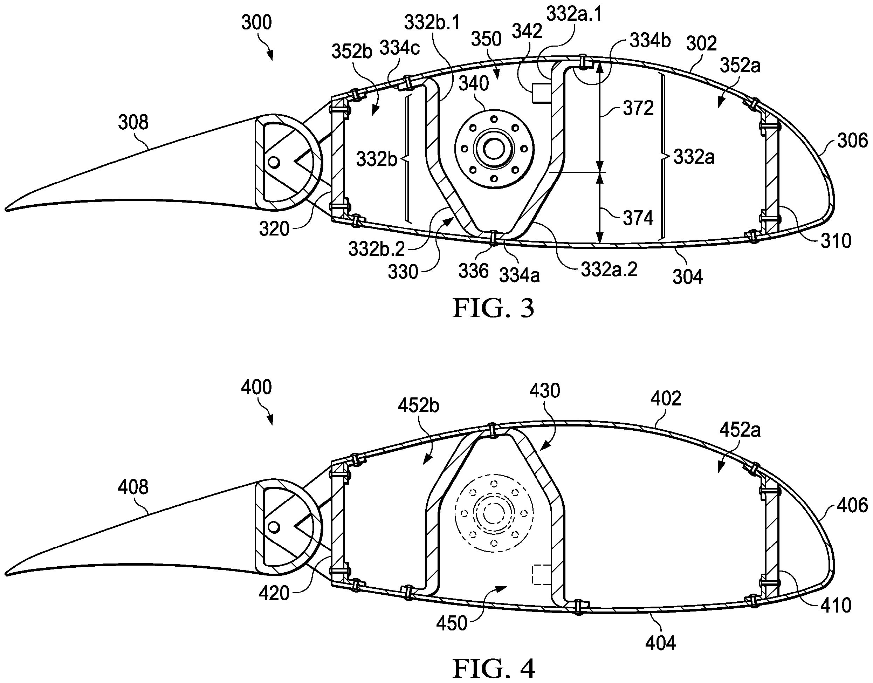

Referring to FIGS. 3-10, FIGS. 3-10 are simplified side, cross-sectional view diagrams illustrating various different example multi-spar wing arrangements that may be provided for various different wing constructions, in accordance with certain embodiments.

Referring to FIG. 3, FIG. 3 is a simplified side, cross-sectional view diagram illustrating example details associated with another multi-spar element 330 for another wing 300, in accordance with certain embodiments. Wing 300 includes an upper skin portion 302, a lower skin portion 304, a forward (or nose) skin 306, and a moveable aileron 308. It is to be understood that wing 300 may have any suitable shape in accordance with embodiments described herein. Wing 300 further includes a forward spar 310, an aft spar 320, and a multi-spar element 330, in which forward spar 310, aft spar 320, and multi-spar element 330 are attached to and extend between the upper skin portion 302 and the lower skin portion 304. Forward spar 310, aft spar 320, and multi-spar element 330 are attached to the upper skin portion 302 and the lower skin portion 304 using fasteners 336, adhesives, combinations thereof, or the like as discussed for various embodiments herein.

Multi-spar element 330 is a continuously integrated element along a forward and aft directional axis that includes a first spar element 332a, a second spar element 332b, a first attachment element 334a, a second attachment element 334b, and a third attachment element 334c. As compared to multi-spar element 230 of FIGS. 2A-2C, multi-spar element 330 of FIG. 3 illustrates that spar elements of a multi-spar element may have any suitable shape and/or configuration in accordance with embodiments described herein.

First spar element 332a includes a first portion 332a.1 and a second portion 332a.2 and second spar element 332b includes a first portion 332b.1 and a second portion 332b.2. For the embodiment of FIG. 3, the first portion 332a.1, 332b.1 of each spar element 332a, 332b, respectively, extends between the upper skin portion 302 and the lower skin portion 304 in a parallel manner for a first distance 372, and the second portion 332a.2, 332b.2 of each spar element 332a, 332b, respectively, angle inward for a second distance 374, and are continuously connected together along the forward and aft directional axis via first attachment element 334a. The first distance 372 and the second distance 374 may be any suitable distance (e.g., to provide suitable clearance for one or more mechanical component(s) and/or electrical component(s) that may be contained in the wing 300). It is to be understood that the first and second distances 372 and 374 can vary among spar elements of a multi-spar element, as wing geometries and dimensions can vary across the chord length for a wing.

In at least one embodiment, the configuration of multi-spar element 330 may advantageously provide for the ability to attach the upper skin portion 302 and the lower skin portion 304 to the multi-spar element 330 using a reduced fastener count in comparison to the fastener count for similarly attaching multi-spar element 230 of FIGS. 2A-2C to the upper and lower skin portions. The multi-spar wing arrangement illustrated for the embodiment of FIG. 3 provides a dry bay 350, a first (forward) wet bay 352a and a second (aft) wet bay 352b for wing 300. A drive shaft 340 and a sensor 342 are housed in the dry bay 350 and liquid(s) are stored in the first and second wet bays 352a, 352b.

Referring to FIG. 4, FIG. 4 is a simplified side, cross-sectional view diagram illustrating example details associated with another multi-spar element 430 for another wing 400, in accordance with certain embodiments. Wing 400 includes an upper skin portion 402, a lower skin portion 404, a forward (or nose) skin 406, and a moveable aileron 408. It is to be understood that wing 400 may have any suitable shape in accordance with embodiments described herein. Wing 400 further includes a forward spar 410, an aft spar 420, and multi-spar element 430, in which forward spar 410, aft spar 420, and multi-spar element 430 are attached to (e.g., using fasteners, adhesives, etc.) and extend between the upper skin portion 402 and the lower skin portion 404. Multi-spar element 430 is a continuously integrated element along a forward and aft directional axis and may include any combination of features as discussed for other multi-spar elements described herein. The multi-spar wing arrangement illustrated for the embodiment of FIG. 4 provides a dry bay 450, a first (forward) wet bay 452a, and a second (aft) wet bay 452b for wing 400. Multi-spar element 430 illustrates that any configuration of multi-spar element(s) may be provided for a wing in accordance with embodiments described herein. For example, multi-spar element 430 may have an orientation between the upper skin portion 402 and the lower skin portion 404 that is vertically 'flipped' in comparison to multi-spar element 330 illustrated for the embodiment of FIG. 3.

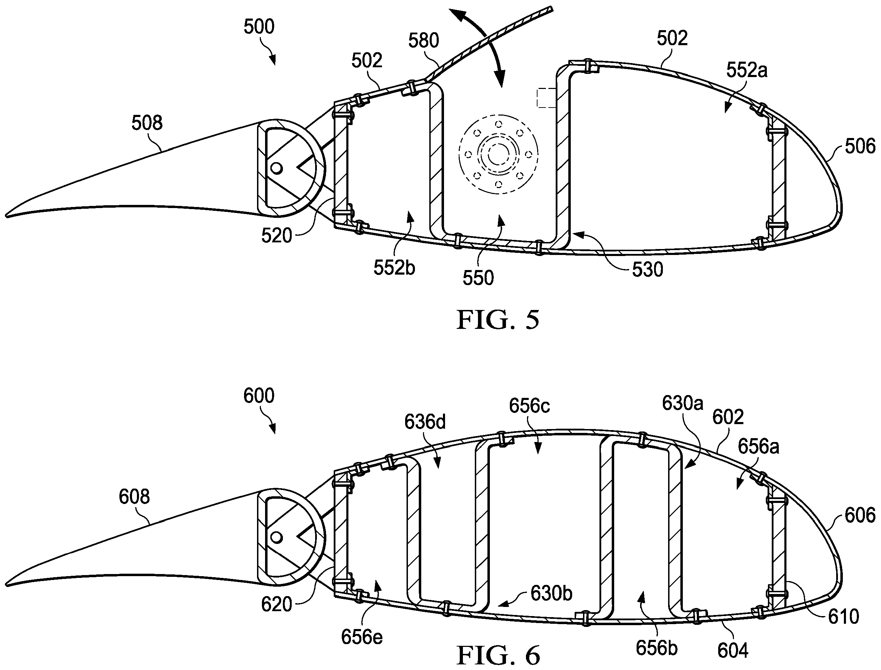

Referring to FIG. 5, FIG. 5 is a simplified side, cross-sectional view diagram illustrating example details associated with another multi-spar element 530 for another wing 500, in accordance with certain embodiments. Wing 500 includes an upper skin portion 502, a lower skin portion 504, a forward (or nose) skin 506, and a moveable aileron 508. It is to be understood that wing 500 may have any suitable shape in accordance with embodiments described herein. Wing 500 further includes a forward spar 510, an aft spar 520, and multi-spar element 530, in which forward spar 510, aft spar 520, and multi-spar element 530 are attached to (e.g., using fasteners, adhesives, etc.) and extend between the upper skin portion 502 and the lower skin portion 504. Multi-spar element 530 is a continuously integrated element along a forward and aft directional axis and may include any combination of features as discussed for other multi-spar elements described herein.

The multi-spar wing arrangement illustrated for the embodiment of FIG. 5 provides a dry bay 550, a first (forward) wet bay 552a and a second (aft) wet bay 552b for wing 500. In addition, at least one access panel 580 is provided for the upper skin portion 502, which enables access to the dry bay 550. Multi-spar element 530 may frame-out the dry bay 550 and provide for the ability to attach access hardware (not shown) such as hinges, latches, etc. to the wing 500 via attachment elements (not labeled) integrated into the multi-spar element 530.

Referring to FIG. 6, FIG. 6 is a simplified side, cross-sectional view diagram illustrating example details associated with another multi-spar wing arrangement for another wing 600. Wing 600 includes an upper skin portion 602, a lower skin portion 604, a forward (or nose) skin 606, and a moveable aileron 608. It is to be understood that wing 600 may have any suitable shape. Wing 600 further includes a forward spar 610, an aft spar 620, a first multi-spar element 630a, and a second multi-spar element 630b in which forward spar 610, aft spar 620, first multi-spar element 630a, and second multi-spar element 630b are attached to (e.g., using fasteners, adhesives, etc.) and extend between the upper skin portion 602 and the lower skin portion 604. First multi-spar element 630a and second multi-spar element 630b are each continuously integrated multi-spar elements along a forward and aft directional axis and may include any combination of features as discussed for other multi-spar elements described herein.

The multi-spar wing arrangement illustrated in FIG. 6 provides a number of bays within wing 600 including a first bay 656a, a second bay 656b, a third bay 656c, a fourth bay 656d, and a fifth bay 656e, any of which may be any combination of wet and/or dry bays. Thus, a wing arrangement may include any number of multi-spar elements.

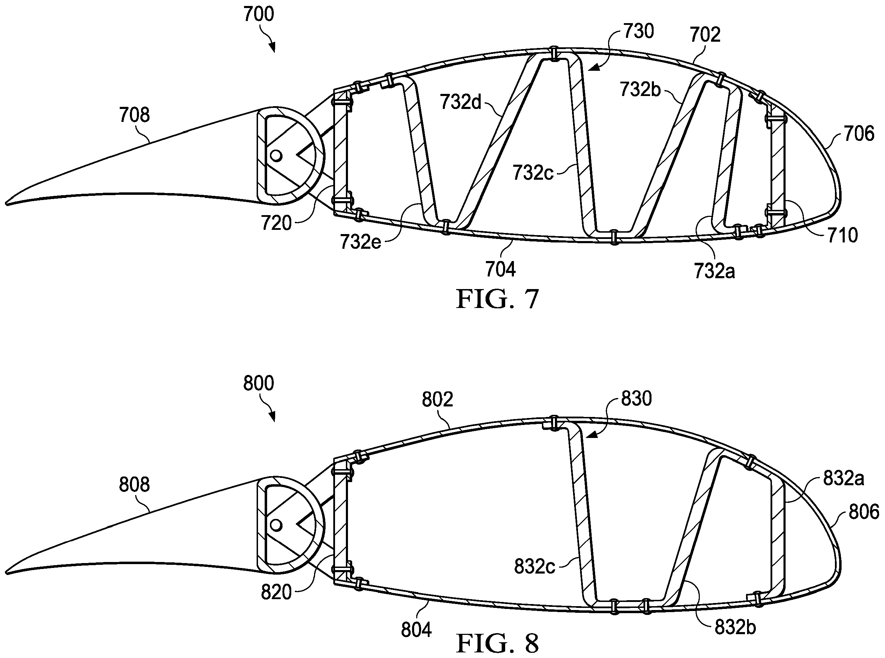

Referring to FIG. 7, FIG. 7 is a simplified side, cross-sectional view diagram illustrating example details associated with another multi-spar wing arrangement for another wing 700. Wing 700 includes an upper skin portion 702, a lower skin portion 704, a forward (or nose) skin 706, and a moveable aileron 708. It is to be understood that wing 700 may have any suitable shape. Wing 700 further includes a forward spar 710, an aft spar 720, and multi-spar element 730, in which forward spar 710, aft spar 720, and multi-spar element 730 are attached to (e.g., using fasteners, adhesives, etc.) and extend between the upper skin portion 702 and the lower skin portion 704. Multi-spar element 730 is a continuously integrated element along a forward and aft directional axis and may include any combination of features as discussed for other multi-spar elements described herein. In particular, FIG. 7 illustrates that a multi-spar element (e.g., multi-spar element 730) may include any number of spar elements.

Multi-spar element 730 includes a first spar element 732a, a second spar element 732b, a third spar element 732c, a fourth spar element 732d, a fifth spar element 732e, and a number of attachment elements (not labeled) to provide a continuously integrated multi-spar element along the forward and aft directional axis for wing 700.

Referring to FIG. 8, FIG. 8 is a simplified side, cross-sectional view diagram illustrating example details associated with another multi-spar wing arrangement for another wing 800. Wing 800 includes an upper skin portion 802, a lower skin portion 804, a forward (or nose) skin 806, and a moveable aileron 808. It is to be understood that wing 800 may have any suitable shape. Wing 800 further includes a multi-spar element 830 and an aft spar 820 in which aft spar 820 and multi-spar element 830 are attached to (e.g., using fasteners, adhesives, etc.) and extend between the upper skin portion 802 and the lower skin portion 804. Multi-spar element 830 is a continuously integrated element along a forward and aft directional axis for wing 800 and may include any combination of features as discussed for other multi-spar elements described herein. In particular, FIG. 8 illustrates that a multi-spar element (e.g., multi-spar element 830) may be used to provide any structural element for a wing construction.

Multi-spar element 830 includes a first spar element 832a, a second spar element 832b, a third spar element 832c, and a number of attachment elements (not labeled) to provide a continuously integrated multi-spar element along the forward and aft directional axis for wing 800 in which the first spar element 832a is the forward spar for the wing 800 as well as provide for the ability to incorporate any combination of wet and dry bays (not labeled) into the wing 800 construction.

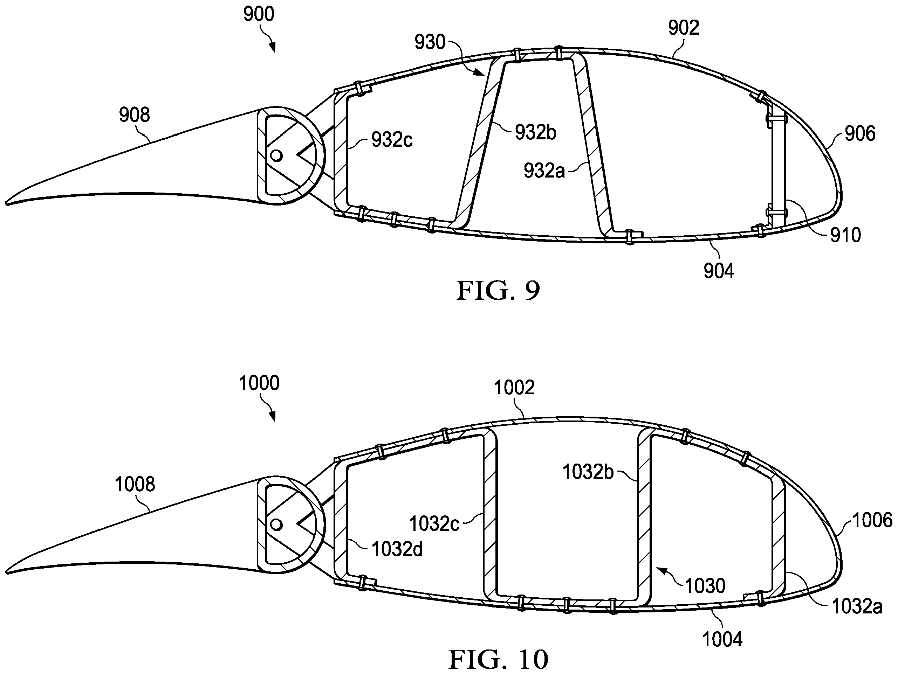

Referring to FIG. 9, FIG. 9 is a simplified side, cross-sectional view diagram illustrating example details associated with another multi-spar wing arrangement for another wing 900. Wing 900 includes an upper skin portion 902, a lower skin portion 904, a forward (or nose) skin 906, and a moveable aileron 908. It is to be understood that wing 900 may have any suitable shape. Wing 900 further includes a forward spar 910 and a multi-spar element 930 in which forward spar 910 and multi-spar element 930 are attached to (e.g., using fasteners, adhesives, etc.) and extend between the upper skin portion 902 and the lower skin portion 904. Multi-spar element 930 is a continuously integrated element along a forward and aft directional axis for wing 900 and may include any combination of features as discussed for other multi-spar elements described herein. Multi-spar element 930 includes a first spar element 932a, a second spar element 932b, a third spar element 932c, and a number of attachment elements (not labeled) to provide a continuously integrated multi-spar element along the forward and aft directional axis for wing 900 in which the third spar element 932c is the aft spar for the wing 900 as well as provide for the ability to incorporate any combination of wet and dry bays (not labeled) into the wing 900 construction.

Referring to FIG. 10, FIG. 10 is a simplified side, cross-sectional view diagram illustrating example details associated with another multi-spar wing arrangement for another wing 1000. Wing 1000 includes an upper skin portion 1002, a lower skin portion 1004, a forward (or nose) skin 1006, and a moveable aileron 1008. It is to be understood that wing 1000 may have any suitable shape. Wing 1000 further includes a multi-spar element 1030 attached to (e.g., using fasteners, adhesives, etc.) and extending between the upper skin portion 1002 and the lower skin portion 1004. Multi-spar element 1030 is a continuously integrated element along a forward and aft directional axis for wing 1000 and may include any combination of features as discussed for other multi-spar elements described herein. Multi-spar element 1030 includes a first spar element 1032a, a second spar element 1032b, a third spar element 1032c, a fourth spar element 1032d, and a number of attachment elements (not labeled) to provide a continuously integrated multi-spar element along the forward and aft directional axis for wing 1000 in which the first spar element 1032a provides the forward spar for the wing 1000 and fourth spar element 1032d provides the aft spar for the wing 1000 as well as provide for the ability to incorporate any combination of wet and dry bays (not labeled) into the wing 1000 construction.

It is to be understood that the example multi-spar wing arrangements discussed in FIGS. 3-10 are only a few of the many possible multi-spar wing arrangements that may be provided for wing constructions and are not meant to limit the broad scope of the present disclosure. Virtually any arrangement (e.g., number, shape, size, configuration, etc.) of spar elements and/or attachment elements may be provided for multi-spar elements of a wing and, thus, are clearly within the scope of the present disclosure. Further any number of multi-spar elements may be provided for a wing arrangement and, thus, are clearly within the scope of the present disclosure.

The diagrams in the FIGURES illustrate the architecture, functionality, methods, and/or operation of possible implementations of various embodiments of the present disclosure. Although several embodiments have been illustrated and described in detail, numerous other changes, variations, alterations, and/or modifications are possible without departing from the scope of the present disclosure, as defined by the appended claims. Those of ordinary skill in the art would appreciate that the present disclosure may be readily used as a basis for designing or modifying other embodiments for carrying out the same purposes and/or achieving the same advantages of the embodiments introduced herein. For example, certain embodiments may be implemented using more, less, and/or other components than those described herein. Moreover, in certain embodiments, some components may be implemented separately, consolidated into one or more integrated components, and/or omitted. Similarly, methods associated with certain embodiments may be implemented using more, less, and/or other steps than those described herein, and their steps may be performed in any suitable order.

Numerous other changes, variations, alterations, and modifications may be ascertained to one of ordinary skill in the art and it is intended that the present disclosure encompass all such changes, variations, alterations, and modifications as falling within the scope of the appended claims.

One or more advantages mentioned herein do not in any way suggest that any one of the embodiments described herein necessarily provides all the described advantages or that all the embodiments of the present disclosure necessarily provide any one of the described advantages. Note that in this Specification, references to various features included in 'one embodiment', 'example embodiment', 'an embodiment', 'another embodiment', 'certain embodiments', 'some embodiments', 'various embodiments', 'other embodiments', 'alternative embodiment', and the like are intended to mean that any such features are included in one or more embodiments of the present disclosure, but may or may not necessarily be combined in the same embodiments.

As used herein, unless expressly stated to the contrary, use of the phrase 'at least one of', 'one or more of' and 'and/or' are open ended expressions that are both conjunctive and disjunctive in operation for any combination of named elements, conditions, or activities. For example, each of the expressions 'at least one of X, Y and Z', 'at least one of X, Y or Z', 'one or more of X, Y and Z', 'one or more of X, Y or Z' and 'A, B and/or C' can mean any of the following: 1) X, but not Y and not Z; 2) Y, but not X and not Z; 3) Z, but not X and not Y; 4) X and Y, but not Z; 5) X and Z, but not Y; 6) Y and Z, but not X; or 7) X, Y, and Z. Additionally, unless expressly stated to the contrary, the terms 'first', 'second', 'third', etc., are intended to distinguish the particular nouns (e.g., element, condition, module, activity, operation, etc.) they modify. Unless expressly stated to the contrary, the use of these terms is not intended to indicate any type of order, rank, importance, temporal sequence, or hierarchy of the modified noun. For example, 'first X' and 'second X' are intended to designate two X elements that are not necessarily limited by any order, rank, importance, temporal sequence, or hierarchy of the two elements. As referred to herein, 'at least one of', 'one or more of', and the like can be represented using the '(s)' nomenclature (e.g., one or more element(s)).

## Claims

1. An aircraft (100) comprising:
a wing (106, 200, 300, 600, 1000), the wing (106, 200, 300, 600, 1000) comprising:
an upper skin portion (202, 302, 602, 1002);
a lower skin portion (204, 304, 604, 1004); and
a multi-spar element (230, 330, 630, 1030) that extends between the upper skin portion (202, 302, 602, 1002) and the lower skin portion (204, 304, 604, 1004), wherein the multi-spar element (230, 330, 630, 1030) comprises a plurality of spar elements (232, 332, 1032) integrated together; wherein
the multi-spar element (230, 330, 630, 1030) separates at least one dry bay (250, 350) of the wing (106, 200, 300, 600, 1000) from at least one wet bay (252, 352) of the wing (106, 200, 300, 600, 1000) that contains a liquid, and the aircraft (100) comprises a drive shaft (140, 240, 340) within at least one dry bay of the wing (106, 200, 300, 600, 1000).

2. The aircraft (100) of Claim 1, wherein the multi-spar element (230, 330, 1030) further comprises:
at least one spar element (232, 332, 1032) that extends between the upper skin portion (202, 302, 1002) and the lower skin portion (204, 304, 1004), wherein the at least one spar element (232, 332, 1032) is continuously connected along a forward and aft directional axis (276) to at least one other spar element (232, 332, 1032) that extends between the upper skin portion (202, 302, 1002) and the lower skin portion (204, 304, 1004).

3. The aircraft (100) of Claim 1, wherein the multi-spar element (230, 330, 630, 1030) is attached to the upper skin portion (202, 302, 602, 1002) and the lower skin portion (204, 304, 604, 1004).

4. The aircraft (100) of Claim 1, further comprising at least one of:
at least one further mechanical component within at least one dry bay area (250, 350) of the wing (200, 300); and
at least one electrical component within at least one dry bay area (250, 350) of the wing (200, 300).

5. The aircraft (100) of Claim 1, wherein the multi-spar element (630) is one of a plurality of multi-spar elements (630a, 630b) of the wing (600), wherein each multi-spar element (630a, 630b) of the plurality of multi-spar elements (630a, 630b) extends between the upper skin portion (602) and the lower skin portion (604).

6. The aircraft (100) of Claim 1, wherein the multi-spar element (1030) provides at least one of:
a forward spar (1032a) for the wing (1000); and
an aft spar (1032d) for the wing (1000).

7. The aircraft (100) of Claim 1, further comprising:
a forward spar (310); and
an aft spar (320), wherein the multi-spar element (330) is between the forward spar (310) and the aft spar (320).

8. The aircraft (100) of Claim 1, wherein the multi-spar element separates at least one dry bay (250, 350) of the wing (200, 300) from at least two wet bays (252a, 252b, 352a, 352b) of the wing (200, 300) that contain a liquid.

9. The aircraft (100) of Claim 1, wherein the aircraft (100) is a tiltrotor aircraft (100) comprising proprotors (120, 130) that are moveable between a helicopter mode and an airplane mode.

## Patentansprüche

1. Luftfahrzeug (100), umfassend:
einen Flügel (106, 200, 300, 600, 1000), wobei der Flügel (106, 200, 300, 600, 1000) umfasst:
einen oberen Außenhautabschnitt (202, 302, 602, 1002);
einen unteren Außenhautabschnitt (204, 304, 604, 1004); und
ein Mehrholmelement (230, 330, 630, 1030), welches sich zwischen dem oberen Außenhautabschnitt (202, 302, 602, 1002) und dem unteren Außenhautabschnitt (204, 304, 604, 1004) erstreckt, wobei das Mehrholmelement (230, 330, 630, 1030) eine Vielzahl von Holmelementen (232, 332, 1032) umfasst, welche miteinander integriert sind; wobei
das Mehrholmelement (230, 330, 630, 1030) zumindest eine Trockenzone (250, 350) des Flügels (106, 200, 300, 600, 1000) von zumindest einer Nasszone (252, 352) des Flügels (106, 200, 300, 600, 1000) trennt, welche eine Flüssigkeit enthält, und das Luftfahrzeug (100) eine Antriebswelle (140, 240, 340) innerhalb zumindest einer Trockenzone des Flügels (106, 200, 300, 600, 1000) umfasst.

2. Luftfahrzeug (100) nach Anspruch 1, wobei das Mehrholmelement (230, 330, 1030) weiter umfasst:
zumindest ein Holmelement (232, 332, 1032), welches sich zwischen dem oberen Außenhautabschnitt (202, 302, 1002) und dem unteren Außenhautabschnitt (204, 304, 1004) erstreckt, wobei das zumindest eine Holmelement (232, 332, 1032) entlang einer nach vorne und hinten gerichteten Achse (276) mit zumindest einem anderen Holmelement (232, 332, 1032), welches sich zwischen dem oberen Außenhautabschnitt (202, 302, 1002) und dem unteren Außenhautabschnitt (204, 304, 1004) erstreckt, fortlaufend verbunden ist.

3. Luftfahrzeug (100) nach Anspruch 1, wobei das Mehrholmelement (230, 330, 630, 1030) an dem oberen Außenhautabschnitt (202, 302, 602, 1002) und dem unteren Außenhautabschnitt (204, 304, 604, 1004) befestigt ist.

4. Luftfahrzeug (100) nach Anspruch 1, weiter zumindest eines der folgenden umfassend:
zumindest eine weitere mechanische Komponente innerhalb zumindest eines Trockenzonenbereichs (250, 350) des Flügels (200, 300); und
zumindest eine elektrische Komponente innerhalb zumindest eines Trockenzonenbereichs (250, 350) des Flügels (200, 300).

5. Luftfahrzeug (100) nach Anspruch 1, wobei das Mehrholmelement (630) eines einer Vielzahl von Mehrholmelementen (630a, 630b) des Flügels (600) ist, wobei jedes Mehrholmelement (630a, 630b) der Vielzahl von Mehrholmelementen (630a, 630b) sich zwischen dem oberen Außenhautabschnitt (602) und dem unteren Außenhautabschnitt (604) erstreckt.

6. Luftfahrzeug (100) nach Anspruch 1, wobei das Mehrholmelement (1030) zumindest eines der folgenden bereitstellt:
einen vorderen Holm (1032a) für den Flügel (1000); und
einen hinteren Holm (1032d) für den Flügel (1000).

7. Luftfahrzeug (100) nach Anspruch 1, weiter umfassend:
einen vorderen Holm (310); und
einen hinteren Holm (320), wobei das Mehrholmelement (330) sich zwischen dem vorderen Holm (310) und dem hinteren Holm (320) befindet.

8. Luftfahrzeug (100) nach Anspruch 1, wobei das Mehrholmelement zumindest eine Trockenzone (250, 350) des Flügels (200, 300) von zumindest zwei Nasszonen (252a, 252b, 352a, 352b) des Flügels (200, 300) trennt, welche eine Flüssigkeit enthalten.

9. Luftfahrzeug (100) nach Anspruch 1, wobei das Luftfahrzeug (100) ein Kipprotorluftfahrzeug (100) ist, welches Proprotoren (120, 130) umfasst, welche zwischen einem Helikoptermodus und einen Flugzeugmodus beweglich sind.

## Revendications

1. Aéronef (100) comprenant :
une aile (106, 200, 300, 600, 1000), l'aile (106, 200, 300, 600, 1000) comprenant :
une partie de peau supérieure (202, 302, 602, 1002) ;
une partie de peau inférieure (204, 304, 604, 1004) ; et
un élément multi-longerons (230, 330, 630, 1030) qui s'étend entre la partie de peau supérieure (202, 302, 602, 1002) et la partie de peau inférieure (204, 304, 604, 1004), dans lequel l'élément multi-longerons (230, 330, 630, 1030) comprend une pluralité d'éléments de longeron (232, 332, 1032) intégrés ensemble ; dans lequel
l'élément multi-longerons (230, 330, 630, 1030) sépare au moins une baie sèche (250, 350) de l'aile (106, 200, 300, 600, 1000) d'au moins une baie humide (252, 352) de l'aile (106, 200, 300, 600, 1000) qui contient un liquide, et l'aéronef (100) comprend un arbre d'entraînement (140, 240, 340) au sein d'au moins une baie sèche de l'aile (106, 200, 300, 600, 1000).

2. Aéronef (100) selon la revendication 1, dans lequel l'élément multi-longerons (230, 330, 1030) comprend en outre :
au moins un élément de longeron (232, 332, 1032) qui s'étend entre la partie de peau supérieure (202, 302, 1002) et la partie de peau inférieure (204, 304, 1004), dans lequel l'au moins un élément de longeron (232, 332, 1032) est connecté en continu le long d'un axe directionnel avant et arrière (276) à au moins un autre élément de longeron (232, 332, 1032) qui s'étend entre la partie de peau supérieure (202, 302, 1002) et la partie de peau inférieure ( 204, 304, 1004).

3. Aéronef (100) selon la revendication 1, dans lequel l'élément multi-longerons (230, 330, 630, 1030) est attaché à la partie de peau supérieure (202, 302, 602, 1002) et à la partie de peau inférieure (204, 304, 604, 1004).

4. Aéronef (100) selon la revendication 1, comprenant en outre au moins un parmi :
au moins un composant mécanique supplémentaire au sein d'au moins une zone de baie sèche (250, 350) de l'aile (200, 300) ; et
au moins un composant électrique au sein d'au moins une zone de baie sèche (250, 350) de l'aile (200, 300).

5. Aéronef (100) selon la revendication 1, dans lequel l'élément multi-longerons (630) est un d'une pluralité d'éléments multi-longerons (630a, 630b) de l'aile (600), dans lequel chaque élément multi-longerons (630a, 630b) de la pluralité d'éléments multi-longerons (630a, 630b) s'étend entre la partie de peau supérieure (602) et la partie de peau inférieure (604).

6. Aéronef (100) selon la revendication 1, dans lequel l'élément multi-longerons (1030) fournit au moins un parmi :
un longeron avant (1032a) pour l'aile (1000) ; et
un longeron arrière (1032d) pour l'aile (1000).

7. Aéronef (100) selon la revendication 1, comprenant en outre :
un longeron avant (310) ; et
un longeron arrière (320), dans lequel l'élément multi-longerons (330) se trouve entre le longeron avant (310) et le longeron arrière (320).

8. Aéronef (100) selon la revendication 1, dans lequel l'élément multi-longerons sépare au moins une baie sèche (250, 350) de l'aile (200, 300) d'au moins deux baies humides (252a, 252b, 352a, 352b) de l'aile (200, 300) qui contiennent un liquide.

9. Aéronef (100) selon la revendication 1, dans lequel l'aéronef (100) est un aéronef à rotors basculants (100) comprenant des rotors basculants (120, 130) qui sont mobiles entre un mode hélicoptère et un mode avion.
